# EUROPEAN PATENT SPECIFICATION

(11) **EP 1 572 060 B1**
(45) Date of publication and mention of the grant of the patent: **20.08.2008**
(21) Application number: 03768808.2
(22) Date of filing: 10.11.2003
(51) Int. Cl.: A61G 7/10, B65G 7/06

(54) **MATERIAL MOVER HAVING A FLUID FILM RESERVOIR**
MATERIALANTRIEB MIT EINEM FLÜSSIGKEITSFILMSPEICHER
DISPOSITIF DE DEPLACEMENT DE MATERIAUX EQUIPE D'UN RESERVOIR DE LIQUIDE

(30) Priority: 12.11.2002 US 425673 P
(43) Date of publication of application: 14.09.2005
(73) Proprietor: Gray Tek, Inc., Newark, DE 19702 (US)
(72) Inventor: JOHNSON, Raynor A. c/o Gray Tek, Inc., Newark, DE 19702 (US)
(74) Representative: Vuillermoz, Bruno
(86) International application number: PCT/US2003/035709
(87) International publication number: WO 2004/043792

(56) References cited:
- US-A- 5 065 464
- US-A- 5 483 709
- US-A- 6 073 291

## Description

### Field of the Invention

This invention relates generally to a fluid-elevated material mover, and more particularly to a fluid-elevated material mover providing enhanced control of a fluid film contained underneath the material mover, at least at a central portion thereof, to facilitate easy transfer of a wide variety of objects.

### Background of the Invention

The need to translocate objects without damaging the object or the transfer surfaces, while conserving electric power and manpower resources, spans the gamut of practical applications. From industrial to medical settings, it is often extremely difficult to easily and practically move an object, even with the aid of a transfer device to assist in the transport.

The range of applications desiring an improved transport device is vast. Examples of objects which require occasional, careful and economically feasible transport include artistic sculptures or other museum exhibits, and large animals, examples of which are horses, cattle, deer or elephants, in need of medical attention at farms, zoos, conservation sites or veterinary hospitals. Moving objects in the shipping industry such as, for example, transferring loads from shipping vessels, which include air, truck and cargo ship freight, to storage facilities (e.g., warehouses, docks) is yet another application in which it would be highly desirable to employ an improved transfer mechanism having decreased electric power consumption requirements.

One application example includes moving persons, such as accident victims, the elderly, or comatose, paralyzed or otherwise immobilized patients, who are frequently difficult to transfer or move in a safe, comfortable manner from one support surface, such as a bed, to another support surface, such as a gurney or wheeled hospital cart. Patients who cannot by themselves sit up or move can be particularly difficult to move from a stretcher to a bed or vice versa, and repositioning such patients frequently requires two or three nurses, orderlies or other attendants.

Prior art patient transfer devices frequently take the form of "floating" or air-elevated air mattress-type movers. Examples of such air mattress-type movers are disclosed in U.S. Pat. No. 6,073,291 issued to David T. Davis on June 13, 2000 and entitled "INFLATABLE MEDICAL PATIENT TRANSFER APPARATUS" and U.S. Pat. No. 5,561,873 issued to Robert E. Weedling on October 8, 1996 and entitled "AIR CHAMBER-TYPE PATIENT MOVER AIR PALLET WITH MULTIPLE CONTROL FEATURES," the entireties of which are incorporated herein by reference. These air mattress-type transfer devices include small perforations in the bottom and are inflated with air to obtain and at least temporarily maintain the mattress in an inflated state. During such inflation, a continuous supply of pressurized air is expelled from the bottom of the transfer device through the perforations to form an air film which supports the inflated transfer device or mat on any reasonably flat, semi-continuous surface, in the same manner as an air pallet used for industrial applications within shops and plants.

The prior art inflatable transfer devices operate by continuously supplying enough air under pressure into a plenum chamber, which is defined by the transfer structure itself, to maintain inflation of the plenum chamber. A serious drawback of such prior art inflatable transfer devices is that there is no way of controlling the air which exits perforations in the bottom of the transfer apparatus. As such, the air blowers used to inflate these types of inflatable transfer structures tend to inefficiently consume relatively large amounts of electric power during use, because no attempt has been made to control or inhibit the random dispersion of the air film expelled from underneath the bottom portion of the transfer apparatus. That is, since the air film dissipates at a high and steady rate, a relatively large amount of electric power is required to drive the blower to maintain inflation of the plenum chamber.

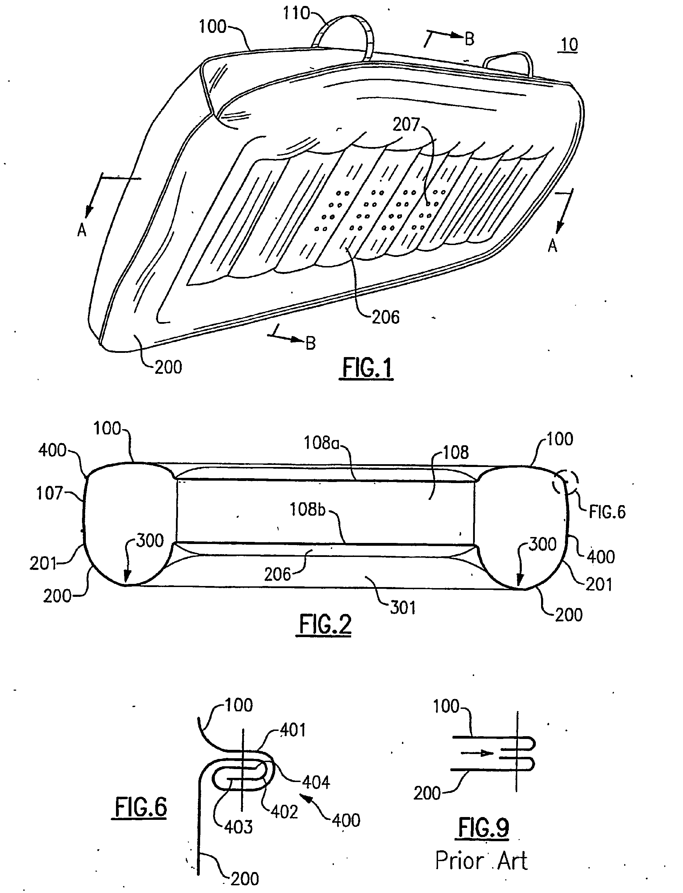

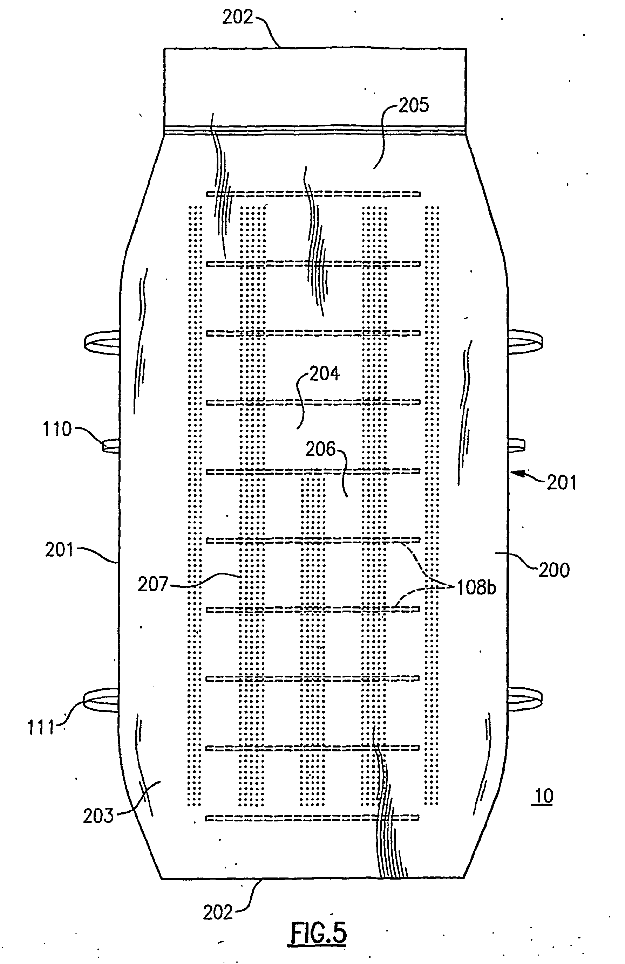

Fig. 2 of the '291 patent appears to show that outer peripheral portions 17a-17c of bottom sheet 17 are raised or elevated with respect to central portion 17x. This, however, is merely an artist's rendition of the mat when it is free-standing. The outer peripheral portions of the bottom sheet are not raised or elevated with respect to a central portion when the transfer apparatus is put into actual use. For example, the '291 patent discloses that when the transfer apparatus is resting on a more or less level surface as in actual use, the bottom also assumes a more or less planar configuration and the raised side portions of the top become even more pronounced (as is clear from the views of the transfer apparatus shown in Figs. 5-7 of the '291 patent). Consequently, the '291 patent provides no structure that actually controls the rate of air film dispersion from underneath the transfer apparatus, and thus, increased operating costs result from the higher demand for electric power, which is needed to operate the air blower used to drive the transfer apparatus and to counter-balance the high and steady rate of air film dissipation from underneath the transfer apparatus.

In addition to the lack of control over the fluid film randomly expelled from the plenum chamber, prior art inflatable transfer apparatuses are plagued by plenum chamber air loss due to the effects of certain types of stresses, such as stress from maintaining the plenum chamber in an inflated state or vertical or lateral pulling stresses, being placed on the stitched seam lines, which connect the various sheets of the transfer device. Fig. 9 illustrates such a prior art seam line structure in which portions of top sheet 100 and bottom sheet 200 are folded under to form a double layer of top and bottom sheets 100 and 200, respectively, and the double layers are placed parallel to one another and stitched to form the seam line junction. Due to the stretching motion imposed on the sheets during inflation of the mattress, a separation or gap between top sheet 100 and bottom sheet 200 tends to develop during use. Air loss from the plenum chamber through such separations or gaps in the seam lines yields an even more inefficient transfer apparatus due to even a higher level of electric power required by the blower unit to maintain an inflated plenum chamber. The cumulative effect between air loss through the seam lines and lack of air retention beneath the air mattress not only negatively affects the safe and easy transfer of an object using the transfer apparatus, but also requires a relatively high power blower that is more costly, bulky and disadvantageously consumes a large amount of electricity.

Accordingly, it would be highly desirable to provide a material mover employing a structure for obtaining and maintaining a fluid film reservoir beneath a bottom portion of the material mover, in addition to providing an improved, fluid retaining seam line junction between the sheets forming the material mover.

Yet another problem associated with prior art air mattress-type movers is that the air inlet for receiving the hose from the blower is positioned in the side wall of the air mattress, typically at the head-end. Although some prior art movers include air inlets at both sides of the head-end in an effort to improve access, it is still often inconvenient to connect the blower hose to the air mattress at this location. Specifically, since the blower hose typically will extend perpendicularly out of the air mattress, substantial clearance must be provided at the side of the air mattress to allow this connection.

In addition, the blower hose is usually simply inserted into the air inlet in the side of the air mattress, without any means for retaining the hose in the air mattress. If there is a sudden shift of the load on the air mattress, or if the patient is obese, there is the possibility that the blower hose will be forced back out of the air mattress due to the increased air pressure within the air mattress plenum chamber. If the blower is of sufficient power, the loose blower hose flailing about could cause a significant threat of injury to the patient or the medical personnel operating the air mattress.

In view of the foregoing, it would also be desirable to provide an improved connection mechanism between the air mattress and the blower hose that is both more convenient and safe to use.

### Summary of the Invention

It is an object of the present invention to overcome the drawbacks of the prior art.

In accordance with one embodiment of the present invention, a material mover includes a plenum chamber, which is divided into a plurality of smaller, open-ended chambers through the use of partition members, defined by substantially rectangular top and bottom sheets, and perimeter side walls connecting the top and bottom sheets. Easy, safe and efficient movement of a load placed upon the material mover is achieved by controlling the dispersion of a fluid film formed under the material mover, which is formed by fluid exiting from a plurality of orifices in the bottom sheet. Specifically, a fluid film weir is provided along the bottom periphery of the material mover to inhibit the escape of the fluid film from underneath the material mover. The fluid film weir effectively defines a fluid reservoir under the material mover for maintaining the position of the fluid film and preventing the fluid from randomly and easily escaping from underneath the material mover. Accordingly, by maintaining and controlling a sufficient fluid film beneath a portion of the material mover, substantially less manual effort and electric power is required to move the load.

In accordance with a preferred embodiment of the present invention, the material mover includes a substantially rectangular top sheet having longitudinal and lateral edges, and upper, middle and lower regions. A substantially rectangular bottom sheet includes longitudinal and lateral edges, and upper, middle and lower regions. The bottom sheet has a greater width than a width of the top sheet at least in the middle and lower regions of the top and bottom sheets. A portion of the bottom sheet is perforated with a plurality of orifices at least in a central portion thereof.

Perimeter side walls connect at least portions of the longitudinal edges of the top and bottom sheets to one another. The perimeter side walls have a lesser height than the height of the partition members along at least a portion of the longitudinal edges of the top and bottom sheets. The perimeter side walls preferably extend along substantially the entire length of the longitudinal edges in the middle region of each of the top and bottom sheets. A plurality of partition members connect at least portions of the top and bottom sheets to one another. The partition members extend generally parallel with the lateral edges of the top and bottom sheets and are spaced from the perimeter side walls. A fluid weir is defined along an outer periphery of the bottom sheet to provide a fluid film reservoir under at least the central portion of the bottom sheet having the plurality of orifices. The fluid weir advantageously inhibits the dispersion of the fluid film from underneath the central portion of the bottom sheet. Accordingly, the fluid exiting the orifices in the bottom sheet is retained for a longer duration within the fluid film reservoir, thus enhancing the performance and efficiency of the material mover.

In accordance with another embodiment of the present invention, a seam line junction is formed between any one of the top sheet, the bottom sheet and the perimeter side walls. The seam line junction between the top and bottom sheets includes an end portion of the top sheet being folded over an end portion of the bottom sheet and looped around a terminal end of the bottom sheet, such that a terminal end of the top sheet is interposed between a region of the end portion of the bottom sheet and the terminal end of the bottom sheet.

Preferably, the seam line junction between the top and bottom sheets and the perimeter side walls includes end portions of any one of the top and bottom sheets being folded over an end portion of the perimeter side walls and looped around a terminal end of the perimeter side walls. The terminal ends of the top and bottom sheets are interposed between portions of the end portion of the perimeter side walls and the terminal end of the perimeter side walls.

In this manner, the seam line junction between the sheets of the material mover is reinforced and does not easily separate due to stretching motion imposed on the sheets during inflation of the mattress. Accordingly, the fluid retaining seam line junction allows for the use of a relatively lower power blower because air loss at the seam lines is prevented.

In accordance with yet another embodiment of the present invention, a fluid inlet arrangement includes at least one fastener, such as, for example, a hook-and-loop fastener (e.g., Velcro®) or a mating surface for a snap-button, positioned on an upper surface portion of the substantially rectangular top sheet. The hook-and-loop fastener includes a first mating surface having a fluid inlet orifice located in a portion thereof and a second mating surface corresponding to the first mating surface to provide a flap covering for the first mating surface. The first and second mating surfaces can also include a mating surface for a snap-button and a corresponding snap-button, respectively, in addition to or in place of the hook and loop fastener. The first mating surface also corresponds to a hook-and-loop fastener and/or snap-button fastener mating surface of a coupler from a fluid provider system to provide coupling between the fluid inlet orifice of the first mating surface and the hook-and-loop and/or snap-button fastener mating surface of the coupler from the fluid provider system.

In accordance with another embodiment of the present invention, a material mover for transferring a load includes a substantially rectangular top sheet having longitudinal and lateral edges, and upper, middle and lower regions. A substantially rectangular bottom sheet has longitudinal and lateral edges, and upper, middle and lower regions. The bottom sheet has a greater width than a width of the top sheet at least in the middle and lower regions of the top and bottom sheets. A portion of the bottom sheet is perforated with a plurality of orifices at least within the mass of the footprint of the load.

Perimeter side walls connect at least portions of the longitudinal edges of the top and bottom sheets to one another. A plurality of partition members connect at least portions of the top and bottom sheets to one another. The partition members extend generally parallel with the lateral edges of the top and bottom sheets and are spaced from the perimeter side walls.

A fluid weir is defined along an outer periphery of the bottom sheet to provide a fluid film reservoir under at least the central portion of the bottom sheet having the plurality of orifices. The dispersion of the fluid film from underneath the central portion of the bottom sheet is advantageously inhibited by the fluid weir.

At least one fastener, such as, for example, a hook-and-loop and/or snap-button fastener, is positioned on a side surface portion of the material mover. The hook-and-loop and/or snap-button fastener includes a first mating surface having a fluid inlet orifice located in a portion thereof and a second mating surface corresponding to the first mating surface provides a flap adaptable to cover the first mating surface. The first mating surface corresponds to a hook-and-loop and/or snap-button fastener mating surface of a coupler from a fluid provider system to provide coupling between the fluid inlet orifice of the first mating surface and the coupler.

Providing a fastener on a side surface portion of the material mover allows the material mover to easily function as a means for jacking a load positioned thereon to a desired height. For example, the material mover, having a patient placed thereon, can be positioned adj acent to a bed mattress and inflated to elevate the patient to an appropriate height for safely transferring the patient from the material mover onto the bed mattress.

The fluid inlet arrangement can be positioned on portions of the side or the upper surface of the material mover. Preferably, the fluid inlet arrangement is positioned only on the upper surface portion of the material mover.

Since at least one fluid inlet orifice is provided on the surface of the top sheet, attachment and detachment of the fluid provider system can be accomplished in the Z-axis direction of the material mover. This "top sheet only" arrangement of the fluid inlet orifice eliminates the requirement of (and drawbacks associated with) connecting/disconnecting the fluid provider system to a port located on a side surface of the material mover. Accordingly, the ability to attach/detach the fluid provider system to inlet orifices in the Z-axis direction advantageously allows for attachment/detachment in tight or cramped conditions, such as at an accident scene, small cargo container or the like, where it may be practically difficult or even impossible to access the side portions of the material mover.

In addition, by using a fastener at the junction between the fluid provider coupler and the fluid inlet of the material mover, safety is enhanced by assuring a secure connection between the fluid provider and the material mover.

In accordance with another embodiment of the present invention, a fluid mattress for supporting a patient includes a substantially rectangular top sheet having longitudinal and lateral edges, and upper, middle and lower regions, and a substantially rectangular bottom sheet having longitudinal and lateral edges, and upper, middle and lower regions. The top sheet has a greater width than a width of the bottom sheet at least in the middle and lower regions of the top and bottom sheets. A portion of the top sheet is perforated with a plurality of orifices through which fluid exits to provide therapy to the patient. The orifices are located at least in a central portion of the top sheet. A patient restraint is defined by the extra width of the top sheet along an outer periphery of the top sheet to facilitate keeping the patient centered on the fluid mattress.

Perimeter side walls connect at least portions of the longitudinal edges of the top and bottom sheets to one another. A plurality of partition members connect at least portions of the top and bottom sheets to one another. The partition members extend generally parallel with the lateral edges of the top and bottom sheets and are spaced from the perimeter side walls.

Providing orifices in the top sheet of the fluid mattress suppresses decubitis ulcer formation because a fluid film exists between the patient and the upper surface of the fluid mattress. Accordingly, the fluid film lessens the severity of damage occurring at pressure areas on the patient's body, which often occur on bony prominences and cause, for example, sacral decubitus.

### Brief Description of the Drawings

For a fuller understanding of the nature and objects of the invention, reference should be made to the following detailed description read in connection with the accompanying drawings, in which:
FIG. 1 is a bottom perspective view of an inflated material mover according to one embodiment of the present invention;
FIG. 2 is a cross-sectional view along line B-B of the material mover of Fig. 1;
FIG. 3 is a cross-sectional view along line A-A of the material mover of Fig. 1;
FIG. 4 is a top view of an uninflated material mover according to the present invention;
FIG. 5 is bottom view of the material mover of Fig. 1;
FIG. 6 is a cross-sectional view of a fold-over seam line junction between top, bottom and perimeter side wall sheets of the material mover according to another embodiment of the present invention;
FIG. 7 is a top view of a fluid inlet arrangement according to the present invention;
FIG. 8 is a perspective view illustrating the coupling between a fluid provider and the fluid inlet arrangement of Fig. 7; and
FIG. 9 is a cross-sectional view of a conventionally known seam line junction between two sheets of an inflatable transport apparatus.

### Detailed Description of the Invention

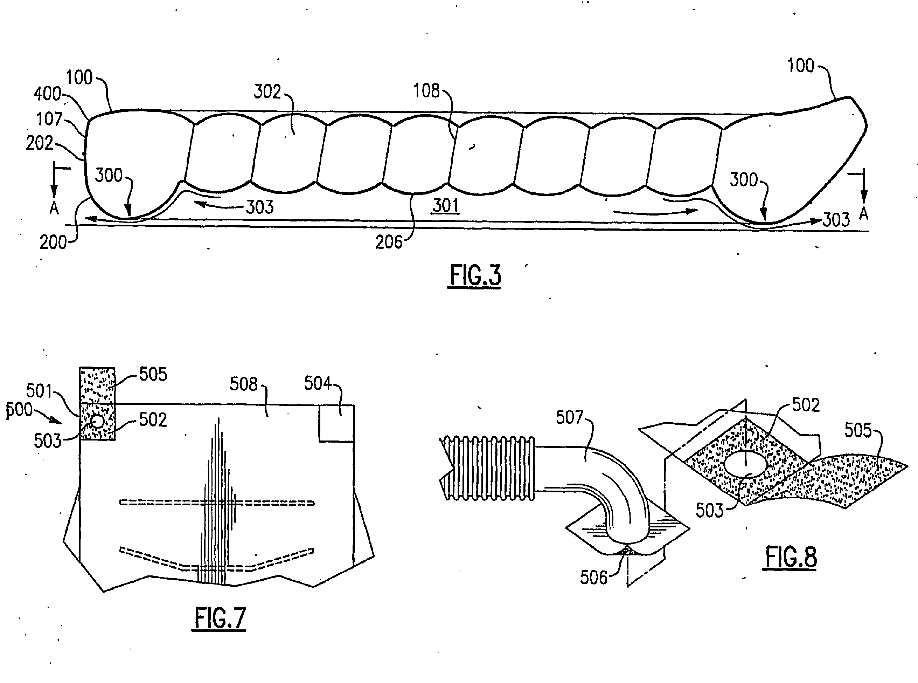

Figs. 1-3 show a material mover 10 that includes a plenum chamber 302 (seen more clearly in Fig. 3), from which a fluid, such as air, oil, water or the like, exits through a plurality of orifices 207 to produce a fluid film 303 underneath at least a central portion of material mover 10. The plenum chamber 302 is defined by substantially rectangular top and bottom sheets 100 and 200, respectively, and perimeter side walls 107 connecting portions of the top and bottom sheets to one another.

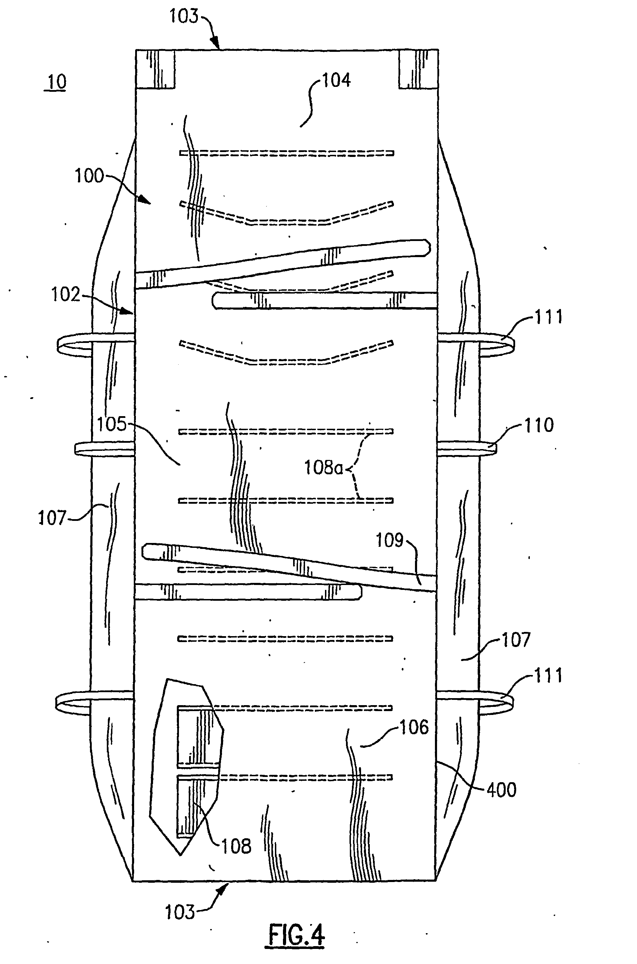

Figs. 4 and 5 show that portions of longitudinal edges 102 of top sheet 100 are connected to perimeter side walls 107, which, in turn, are connected to portions of longitudinal edges 201 of bottom sheet 200. The perimeter side walls 107 extend substantially the entire longitudinal length of lower and middle regions 106 and 105, respectively, of top sheet 100, and lower and middle regions 203 and 204, respectively, of bottom sheet 200. Lateral edges 103 are located in upper region 104 and lower region 106 of top sheet 100 and are connected to lateral edges 202 in upper region 205 and lower region 203 of bottom sheet 200. In this manner, plenum chamber 302 is defined by top sheet 100, bottom sheet 200 and perimeter side walls 107.

A plurality of partition members 108, which form a plurality of smaller, open-ended chambers in the interior of plenum chamber 302, connect at least portions of top and bottom sheets 100 and 200, respectively, to one another, along seam lines 108a and 108b, respectively. The partition members 108, which extend parallel with respect to lateral edges 103 of top sheet 100 and lateral edges 202 of bottom sheet 200, are spaced from perimeter side walls 107, as seen most clearly in Fig.2. Partition members 108 have a height that is greater than the height of perimeter side walls 107, again, as seen most clearly in Fig. 2.

Bottom sheet 200 provides a surface from which a fluid is expelled to create a fluid film reservoir 301 (seen most clearly in Fig. 3) between a portion of bottom sheet 200 and a surface over which material mover 10 is to be moved. At least a central portion 206 of bottom sheet 200 is perforated with a plurality of orifices 207 (seen more clearly in Fig. 5) to provide openings in bottom sheet 200 from which fluid exits. Accordingly, the fluid film accumulates to form fluid film reservoir 301 between central portion 206 of bottom sheet 200 and the surface over which the material mover, having a load or object positioned thereon, is to be moved.

To control or inhibit the dispersion of the fluid film expelled from plenum chamber 302, a fluid weir 300 is defined at an outer periphery of bottom sheet 200 and surrounds central portion 206 of bottom sheet 200. No orifices are provided in the outer peripheral portion of bottom sheet 200 defining fluid weir 300. The provision of fluid weir 300 is made possible because bottom sheet 200 has a greater width than the width of top sheet 100, at least in lower and middle regions 203 and 204, respectively. As fluid exits orifices 207 in central portion 206 of bottom sheet 200, fluid film reservoir 301 is created and maintained due to the entrapment of fluid under at least central portion 206 of bottom sheet 200. That is, fluid weir 300 provides a physical structure which inhibits the dispersion of fluid from underneath central portion 206 of bottom sheet 200.

The inventor discovered that by providing fluid weir 300 to control the rate that the fluid film disperses from underneath the central portion of material mover 10, substantially less air blower power, in addition to a decrease in pulling efforts, manually or automated, is required to translocate a load or object placed on the material mover. In addition, material mover 10 can be easily adapted to move heavier loads, such as, for example, an obese patient, by increasing the lateral dimension of the fluid weir. This is accomplished by adding material to lateral edges 103 and 202 of top and bottom sheets 100 and 200, respectively, while maintaining the other dimensional relationships between the top and bottom sheets, the perimeter side walls and the partition members. That is, the partition members have a greater height than the height of the perimeter side walls and the width of the bottom sheet remains larger than the width of the top sheet.

Figs. 4 and 5 show that load securing straps 109 extend parallel with lateral edges 103 across the surface of top sheet 100 to furnish a mechanism by which the load can safely be secured on the surface of top sheet 100. One end of each load securing strap 109 is securely fixed to material mover 10 by being attached between the seam line (e.g., seam line junction 400 shown in Fig. 6) joining top sheet 100 and bottom sheet 200.

Load pulling straps 110 and 111 are provided to supply gripping members for pulling material mover 10 over the terrain which the load is to be transported. Load pulling straps 110 provided in middle region 105 of top sheet 100 have two ends of a loop-type structure attached between the seam line joining top sheet 100 and perimeter side wall 107. Load pulling straps 111 formed in upper region 104 and lower region 106 of top sheet 100 and upper region 205 and lower region 203 of bottom sheet 200 have one end of a loop-type structure attached between the seam line joining top sheet 100 and perimeter side walls 107, and an opposite end of the loop-type structure is attached between the seam line joining perimeter side walls 107 and bottom sheet 200.

With reference to Fig. 6, a fold over seam line junction 400 is used between any one of top sheet 100, bottom sheet 200 and perimeter side walls 107. Fig. 6 is exemplary of seam line junction 400 in existence between longitudinal and/or lateral edges of top and bottom sheets 100 and 200, respectively (only a single seam line is present along lateral edges 103 and 202). An end portion 401 of top sheet 100 is folded over an end portion 402 of bottom sheet 200, and is looped around terminal end portion 403 of bottom sheet 200. In this manner, portions of end portion 402 of bottom sheet 200 are sandwiched between folded over portions of end portion 401 of top sheet 100. A terminal end portion 404 of top sheet 100 is interposed between a portion of end portion 402 and terminal end portion 403 of bottom sheet 200.

Fig. 7 shows that a fluid inlet arrangement 500 includes at least one inflatable chamber between substantially rectangular top and bottom sheets having lateral and longitudinal edges. Fluid inlet arrangement 500 includes at least one fastener, such as a hoolc-and-loop fastener 501 (e.g., Velcro®) positioned on a portion of substantially rectangular top sheet 508. A fluid inlet orifice 503 is located in a portion of a first mating surface 502 and corresponds to a second mating surface 505 of flap covering 504, which provides a closure for first mating surface 502 and fluid inlet orifice 503. The first and second mating surfaces 502 and 505, respectively, can also include other fastener structures, such as, for example, a snap-button mating structure.

The fluid inlet first mating surface 502 corresponds to a fluid provider system hook-and-loop fastener mating surface 506 to provide easy coupling between fluid inlet orifice 503 and an opening of fluid providing coupler 507, which is positioned on a portion of fluid provider hook-and-loop fastener mating surface 506. This quick coupling mechanism between fluid inlet arrangement 500 and the fluid provider system (not shown), an example of which is disclosed in EP 1561067 entitled "FLUID PROVIDER ASSEMBLY AND PORTABLE FLUID PROVIDER SYSTEM INCLUDING SAME," the entirety of which is incorporated herein by reference, provides efficient and secure attaching and detaching of the fluid provider system from fluid inlet arrangement 500. Similar to the fluid inlet arrangement first and second mating surfaces discussed above, the fluid provider system fastener mating surface can be a snap-button mating surface corresponding to the fluid inlet first mating surface on the material mover.

The individual components of the invention as described above may be formed from a variety of known materials. For example, top and bottom sheets 100 and 200, respectively, and perimeter side walls 107 can be formed from any flexible, non-permeable material, for example 2-3 mm plastic (eg., polyethylene), tyvek and coated nylon. Partition members 108 can be formed from the same materials used to form the top and bottom sheets and the perimeter side walls, except that partition members 108 are not required to be impermeable. Load securing and load pulling straps 109 and 110, respectively, can be formed from any relatively inelastic material.

While the present invention has been particularly shown and described with reference to the drawings, it will be understood by one skilled in the art that various changes in detail may be effected therein without departing from the scope of the invention as defined by the claims.

## Claims

1. A material mover (10) for transferring a load, comprising :
■ a rectangular top sheet (100) having longitudinal (102) and lateral (103) edges, and upper (104), middle (105) and lower (106) regions ;
■ a rectangular bottom sheet (200) having longitudinal (201) and lateral (202) edges, and upper (205), middle (204) and lower (203) regions, said bottom sheet (200) having a greater width than the width of said top sheet (100) at least in said middle (105) and lower (106) regions of said top (100) and bottom (200) sheets, and a portion of said bottom sheet (200) being perforated with a plurality of orifices (207) at least within the mass of the footprint of the load ;
■ perimeter side walls (107) connecting said longitudinal edges (102, 201) of said top (100) and bottom (200) sheets to one another ;
■ a plurality of partition members (108) connecting at least portions of said top (100) and bottom (200) sheets to one another, said partition members (108) extending generally parallel with said lateral edges (103, 202) of said top (100) and bottom (200) sheets and being spaced from said perimeter side walls (107) ;
■ and a fluid weir (300) defined along an outer periphery of said bottom sheet (200) to provide a fluid film reservoir (301) under at least said central portion (206) of said bottom sheet (200) having said plurality of orifices (207), wherein said fluid weir (300) is defined and inhibits dispersion of said fluid film from underneath said central portion (206) of said bottom sheet (200) when the material mover has a load on its top sheet (100) and when the fluid film reservoir (301) is provided between at least said central portion (206) of said bottom sheet (200) having said plurality of orifices (207) and a surface over which the material mover is to be moved;
wherein said perimeter side walls (107) have a lesser height than the height of said partition members (108) along at least a portion of said longitudinal (102, 201) edges of said top (100) and bottom (200) sheets.

2. The material mover (10) of claim 1, wherein said perimeter side walls (107) extend substantially the entire length of said top (100) and bottom (200) sheets, and have a lesser height than the height of said partition members (108) at least in said middle regions of said top (100) and bottom (200) sheets.

3. The material mover (10) of claim 1, further comprising a seam line junction (400) between any one of said top sheet (100), said bottom sheet (200) and said perimeter side walls (107).

4. The material mover (10) of claim 3, wherein an end portion of said top sheet (100) is folded over an end portion of said bottom sheet (200) and looped around a terminal end (403) of said bottom sheet (200) such that a terminal end (404) of said top sheet (100) is interposed between a region of said end portion of said bottom sheet (200) and said terminal end of said bottom sheet.

5. The material mover (10) of claim 4, wherein end portions (402) of any one of said top (100) and bottom (200) sheets are folded over end portions of said perimeter side walls (107) and looped around terminal ends of said perimeter side wall (107) such that terminal ends (403, 404) of said top (100) and bottom (200) sheets are interposed between portions of said end portions of said perimeter side walls (107) and said terminal ends of said perimeter side walls (107).

6. The material mover (10) of claim 3, further comprising load pulling straps (110, 111) provided at least in said middle region (105) of said top sheet (100), each load pulling strap (110, 111) having two ends of a loop-type structure attached between said seam line junction (400) between said top sheet (100) and said perimeter side walls (107).

7. The material mover (10) of claim 3, further comprising load pulling straps (110, 111) provided at least in said upper and lower regions of said top (100) and bottom (200) sheets, respectively, wherein one end of each said load pulling strap (110, 111) is attached to said seam line junction (400) between said top sheet (100) and said perimeter side walls (107) and an opposite end of said strap is attached between said seam line junction (400) between said perimeter side walls (107) and said bottom sheet (200).

8. The material mover (10) of claim 1, comprising at least one fastener positioned on at least one side surface portion of the material mover (10), and having a first mating surface (502) including a fluid inlet orifice (503) located in a portion thereof and a second mating surface (505) corresponding to said first mating surface (502) to provide a flap (504) adaptable to cover said first mating surface (502), wherein said first mating surface (502) corresponds to a fastener mating surface of a coupler (507) from a fluid provider system to provide coupling between said fluid inlet orifice (503) of said first mating surface (502) and the coupler (507).

9. The material mover (10) of claim 8, wherein two of said fasteners comprise hook-and-loop fasteners (501) that are positioned on opposite side surface portions of said material mover (10).

10. A material mover (10) of any of the preceding claims, comprising :
■ at least one inflatable chamber between the top (100) and bottom (200) sheets ; and
■ at least one fastener positioned on an upper surface portion of said substantially rectangular top sheet (100), and having a first mating surface (502) including a fluid inlet orifice (503) located in a portion thereof and a second mating surface (505) corresponding to said first mating surface (502) to provide a flap (504) adaptable to cover said first mating surface (502),
wherein said first mating surface (502) corresponds to a fastener mating surface of a coupler (507) from a fluid provider system to provide coupling between said fluid inlet orifice (503) of said first mating surface (502) and the coupler (507).

11. The material mover (10) of claim 10, wherein said fastener comprises a hook-and-loop fastener (501) that is positioned only on said upper surface portion.

12. Use of a material mover of any of the preceding claims as a fluid mattress for supporting a patient, so as to comprise :
■ a portion of said top sheet (200) being perforated with a plurality of orifices (207) through which fluid exits to provide therapy to the patient, said orifices (207) being located at least in a central portion of said top sheet (200) ; and
■ a patient restraint (300) defined along an outer periphery of said top sheet (200) to facilitate keeping the patient centered on the fluid mattress.

## Patentansprüche

1. Materialantrieb (10) zum Überführen einer Last, welcher enthält:
eine rechteckige obere Bahn (100), welche längslaufende (102) und seitliche (103) Kanten, und obere (104), mittlere (105) und untere (106) Bereiche hat; eine rechteckige untere Bahn (200), welche längslaufende (201) und seitliche (202) Kanten, und obere (205), mittlere (204) und untere (203) Bereiche hat, wobei die untere Bahn (200) zumindest in dem mittleren (105) und unteren (106) Bereich der oberen (100) und unteren (200) Bahn eine größere Breite als die Breite der oberen Bahn (100) hat, und ein Abschnitt der unteren Bahn (200) zumindest innerhalb der Aufstandsflächenmasse von der Last mit einer Mehrzahl von Öffnungen (207) perforiert ist;
Umriss-Seitenwände (107), welche die längslaufenden Kanten (102, 201) von der oberen (100) und unteren (200) Bahn miteinander verbinden;
eine Mehrzahl von Abtrennungen (108), welche zumindest Abschnitte der oberen (100) und unteren (200) Bahn miteinander verbinden, wobei sich die Abtrennungen (108) im Allgemeinen parallel zu den seitlichen Kanten (103, 202) der oberen (100) und unteren (200) Bahn erstrecken und von den Umriss-Seitenwänden (107) beabstandet sind;
und eine Fluidreuse (300), welche entlang eines Außenumfangs von der unteren Bahn (200) bestimmt ist, um ein Fluidfilm-Reservoir (301) unterhalb von zumindest dem Zentralabschnitt (206) von der unteren Bahn (200), welcher die Mehrzahl von Öffnungen (207) hat, bereitzustellen, wobei die Fluidreuse (300) bestimmt ist und eine Verteilung des Fluidfilms unterhalb des Zentralabschnittes (206) von der unteren Bahn (200) unterdrückt, wenn der Materialantrieb eine Last an seiner oberen Bahn (100) hat, und wenn das Fluidfilm-Reservoir (301) zwischen zumindest dem Zentralabschnitt (206) von der unteren Bahn (200), welcher die Mehrzahl von Öffnungen (207) hat, und einer Oberfläche, oberhalb derer der Materialantrieb zu bewegen ist, bereitgestellt ist;
wobei die Umriss-Seitemvände (107) entlang von zumindest einem Abschnitt der längslaufenden (102, 201) Kanten von der oberen (100) und unteren (200) Bahn eine geringere Höhe als die Höhe der Abtrennungen (108) haben.

2. Materialantrieb (10) nach Anspruch 1, bei welchem sich die Umriss-Seitenwände (107) im wesentlichen entlang der gesamten Länge von der oberen (100) und unteren (200) Bahn erstrecken und zumindest in den mittleren Bereichen von der oberen (100) und unteren (200) Bahn eine geringere Höhe als die Höhe von den Abtrennungen (108) haben.

3. Materialantrieb (10) nach Anspruch 1, welcher ferner eine Randlinienverbindung (400) zwischen jeglichem aus der oberen Bahn (100), der unteren Bahn (200) und den Umriss-Seitenwänden (107) enthält.

4. Materialantrieb (10) nach Anspruch 3, bei welchem ein Endabschnitt von der oberen Bahn (100) über einen Endabschnitt von der unteren Bahn (200) gefaltet ist und um ein Abschlussende (403) von der unteren Bahn (200) derart umgelenkt ist, so dass ein Abschlussende (404) von der oberen Bahn (100) zwischen einem Bereich des Endabschnittes von der unteren Bahn (200) und des Abschlussendes von der unteren Bahn zwischengelegt ist.

5. Materialantrieb (10) nach Anspruch 4, bei welchem Endabschnitte (402) von jeglicher aus der oberen (100) und unteren (200) Bahn über Endabschnitte von den Umriss-Seitenwänden (107) gefaltet sind und um Abschlussenden von der Umriss-Seitenwand (107) umgelenkt sind, so dass Abschlussenden (403, 404) von der oberen (100) und unteren (200) Bahn zwischen Abschnitten von den Endabschnitten von den Umriss-Seitenwänden (107) und den Abschlussenden von den Umriss-Seitenwänden (107) zwischengelegt sind.

6. Materialantrieb (10) nach Anspruch 3, welcher ferner Lastzuggurte (110, 111) enthält, welche zumindest in dem mittleren Bereich (105) von der oberen Bahn (100) bereitgestellt sind, wobei jeder Lastzuggurt (110, 111) zwei Enden von einem Umlauftyp-Aufbau hat, welche zwischen der Randlinienverbindung (400) zwischen der oberen Bahn (100) und den Umriss-Seitemvänden (107) angebracht sind.

7. Materialantrieb (10) nach Anspruch 3, welcher ferner Lastzuggurte (110, 111) enthält, welche jeweils zumindest in dem oberen und unteren Bereich der oberen (100) und unteren (200) Bahn bereitgestellt sind, wobei ein Ende von jedem der Lastzuggurte (110, 111) an der Randlinienverbindung (400) zwischen der oberen Bahn (100) und den Umriss-Seitenwänden (107) angebracht ist, und ein gegenüberliegendes Ende von dem Gurt zwischen der Randlinienverbindung (400) zwischen den Umriss-Seitenwänden (107) und der unteren Bahn (200) angebracht ist.

8. Materialantrieb (10) nach Anspruch 1, welcher zumindest eine Befestigung enthält, welche zumindest an einem Seitenoberflächenabschnitt von dem Materialantrieb (10) positioniert ist und eine erste Kontaktoberfläche (502), welche eine Fluid-Einlassöffnung (503) enthält, welche sich in einem Abschnitt davon befindet, und eine zweite Kontaktoberfläche (505), welche der ersten Kontaktoberfläche (502) entspricht, hat, um eine Lasche (504) bereitzustellen, welche dazu angepasst ist, um die erste Kontaktoberfläche (502) zu bedecken, wobei die erste Kontaktoberfläche (502) einer Befestigungs-Kontaktoberfläche von einer Kopplung (507) von einem Fluid-Bereitstellungssystem entspricht, um eine Kopplung zwischen der Fluid-Einlassöffnung (503) von der ersten Kontaktoberfläche (502) und der Kopplung (507) bereitzustellen.

9. Materialantrieb (10) nach Anspruch 8, bei welchem zwei von den Befestigungen Haken-und-Schleifen-Befestigungen (501) enthalten, welche an gegenüberliegenden Seitenoberflächenabschnitten von dem Materialantrieb (10) positioniert sind.

10. Materialantrieb (10) nach einem der vorangehenden Ansprüche, welcher enthält:
zumindest eine aufblasbare Kammer zwischen der oberen (100) und unteren (200) Bahn; und
zumindest eine Befestigung, welche an einem oberen Oberflächenabschnitt von der im wesentlichen rechteckigen oberen Bahn (100) positioniert ist, und eine erste Kontaktoberfläche (502), welche eine Fluid-Einlassöffnung (503), welche sich in einem Abschnitt davon befindet, und eine zweite Kontaktoberfläche (505), welche der ersten Kontaktoberfläche (502) entspricht, hat, um eine Lasche (504) bereitzustellen, welche dazu angepasst ist, um die erste Kontaktoberfläche (502) zu bedecken,
wobei die erste Kontaktoberfläche (502) einer Befestigungs-Kontaktoberfläche von einer Kopplung (507) von einem Fluid-Bereitstellungssystem entspricht, um eine Kopplung zwischen der Fluid-Einlassöffnung (503) von der ersten Kontaktoberfläche (502) und der Kopplung (507) bereitzustellen.

11. Materialantrieb (10) nach Anspruch 10, bei welchem die Befestigung eine Haken-und-Schleifen-Befestigung (501) enthält, welche lediglich an dem oberen Oberflächenabschnitt positioniert ist.

12. Verwendung von einem Materialantrieb nach einem der vorangehenden Ansprüche als eine Fluid-Matratze zum Tragen eines Patienten, welche enthält:
einen Abschnitt der oberen Bahn (200), welcher mit einer Mehrzahl von Öffnungen (207) perforiert ist, durch welche ein Fluid austritt, um dem Patienten eine Heilbehandlung zuzuführen, wobei sich die Öffnungen (207) zumindest in einem Zentralabschnitt der oberen Bahn (200) befinden; und
eine Patientenstütze (300), welche entlang eines Außenumfanges von der oberen Bahn (200) bestimmt ist, um ein mittiges Beibehalten des Patienten auf der Fluid-Matratze zu unterstützen.

## Revendications

1. Dispositif de déplacement de matériau (10) pour transférer une charge, comportant :
■ une feuille supérieure rectangulaire (100) ayant des bords longitudinaux (102) et latéraux (103), et des zones supérieure (104), médiane (105) et inférieure (106),
■ une feuille inférieure rectangulaire (200) ayant des bords longitudinaux (201) et latéraux (202), et des zones supérieure (205), médiane (204) et inférieure (203), ladite feuille inférieure (200) ayant une largeur supérieure à la largeur de ladite feuille supérieure (100) au moins dans lesdites zones médiane (105) et inférieure (106) desdites feuilles supérieure (100) et inférieure (200), et une partie de ladite feuille inférieure (200) étant perforée avec une pluralité d'orifices (207) au moins dans la masse de l'empreinte de la charge,
■ des parois latérales périmétriques (107) reliant lesdits bords longitudinaux (102, 201) desdits feuilles supérieure (100) et inférieure (200) les uns aux autres,
■ une pluralité d'éléments de séparation (108) reliant au moins des parties desdites feuilles supérieure (100) et inférieure (200) les unes aux autres, lesdits éléments de séparation (108) s'étendant généralement parallèlement auxdits bords latéraux (103, 102) desdites feuilles supérieure (100) et inférieure (200), et étant espacés desdits parois latérales périmétriques (107),
■ et un déversoir de liquide (300) défini le long d'une périphérie extérieure de ladite feuille inférieure (200) pour fournir un réservoir de film de liquide (301) sous au moins ladite partie centrale (206) de ladite feuille inférieure (200) ayant ladite pluralité d'orifices (207), dans lequel ledit déversoir de liquide (300) est défini et empêche une dispersion dudit film de liquide à partir du dessous de ladite partie centrale (206) de ladite feuille inférieure (200) lorsque le dispositif de déplacement de matériau a une charge sur sa feuille supérieure (100) et lorsque le réservoir de film de liquide (301) est agencé entre au moins ladite partie centrale (206) de ladite feuille inférieure (200) ayant ladite pluralité d'orifices (207) et une surface sur laquelle le dispositif de déplacement de matériau doit être déplacé,
dans lequel lesdites parois latérales périmétriques (107) ont une hauteur inférieure à la hauteur desdits éléments de séparation (108) le long d'au moins une partie desdits bords longitudinaux (102, 201) desdites feuilles supérieure (100) et inférieure (200).

2. Dispositif de déplacement de matériau (10) selon la revendication 1, dans lequel lesdites parois latérales périmétriques (107) s'étendent sur sensiblement toute la longueur desdites feuilles supérieure (100) et inférieure (200), et ont une hauteur inférieure à la hauteur desdits éléments de séparation (108) au moins dans lesdites zones médianes desdites feuilles supérieure (100) et inférieure (200).

3. Dispositif de déplacement de matériau (10) selon la revendication 1, comportant en outre une jonction de ligne de couture (400) entre une quelconque parmi ladite feuille supérieure (100), ladite feuille inférieure (200) et lesdites parois latérales périmétriques (107).

4. Dispositif de déplacement de matériau (10) selon la revendication 3, dans lequel une partie d'extrémité de ladite feuille supérieure (100) est repliée sur une partie d'extrémité de ladite feuille inférieure (200) et mise en boucle autour d'une extrémité terminale (403) de ladite feuille inférieure (200), de telle sorte qu'une extrémité terminale (404) de ladite feuille supérieure (100) est interposée entre une zone de ladite partie d'extrémité de ladite feuille inférieure (200) et ladite extrémité terminale de ladite feuille inférieure.

5. Dispositif de déplacement de matériau (10) selon la revendication 4, dans lequel des parties d'extrémité (402) d'une quelconque desdites feuilles supérieure (100) et inférieure (200) sont repliées sur des parties d'extrémité desdites parois latérales périmétriques (107) et mises en boucle autour d'extrémités terminales de ladite paroi latérale périmétriques (107) de telle sorte que des extrémités terminales (403, 404) desdites feuilles supérieure (100) et inférieure (200) sont interposées entre des parties desdites parties d'extrémité desdites parois latérales périmétriques (107) et lesdites extrémités terminales desdites parois latérales périmétriques (107).

6. Dispositif de déplacement de matériau (10) selon la revendication 3, comportant en outre des sangles de traction de charge (110, 111) agencées au moins dans ladite zone médiane (105) de ladite feuille supérieure (100), chaque sangle de traction de charge (110, 111) ayant deux extrémités d'une structure de type boucle fixées entre ladite jonction de ligne de couture (400) entre ladite feuille supérieure (100) et lesdites parois latérales périmétriques (107).

7. Dispositif de déplacement de matériau (10) selon la revendication 3, comportant en outre des sangles de traction de charge (110, 111) agencées au moins dans lesdites zones supérieure et inférieure desdites feuilles supérieure (100) et inférieure (200), respectivement, dans lequel une première extrémité de chaque sangle de traction de charge (110, 111) est fixée sur ladite jonction de ligne de couture (400) entre ladite feuille supérieure (100) et lesdites parois latérales périmétriques (116), et une extrémité opposée de ladite sangle est fixée entre ladite jonction de ligne de couture (400) entre lesdites parois latérales périmétriques (107) et ladite feuille inférieure (200).

8. Dispositif de déplacement de matériau (10) selon la revendication 1, comportant au moins une fixation positionnée sur au moins une partie de surface latérale du dispositif de déplacement de matériau (10), et ayant une première surface d'appariement (502) comprenant un orifice d'entrée de fluide (503) positionné dans une partie de celle-ci, et une seconde surface d'appariement (505) correspondant à ladite première surface d'appariement (62) pour fournir un volet (64) adaptable pour recouvrir ladite première surface d'appariement (62), dans lequel ladite première surface d'appariement (62) correspond à une surface d'appariement de fixation d'un dispositif de couplage (507) à partir d'un système de fourniture de fluide pour fournir un couplage entre ledit orifice d'entrée de fluide (503) de ladite première surface d'appariement (62) et le dispositif de couplage (507).

9. Dispositif de déplacement de matériau (10) selon la revendication 8, dans lequel deux desdites fixations comportent des fixations à crochets et à boucles (520) qui sont positionnées sur des parties de surface latérale opposées dudit dispositif de déplacement de matériau (10).

10. Dispositif de déplacement de matériau (10) selon l'une quelconque des revendications précédentes, comportant :
■ au moins une chambre gonflable entre les feuilles supérieure (100) et inférieure (200), et
■ au moins une fixation positionnée sur une partie de surface supérieure de ladite feuille supérieure sensiblement rectangulaire (100), et ayant une première surface d'appariement (60) comprenant un orifice d'entrée de fluide (503) positionné dans une partie de celle-ci, et une seconde surface d'appariement (505) correspondant à ladite première surface d'appariement (502) pour fournir un volet (504) adaptable pour recouvrir ladite première surface d'appariement (502),
dans lequel ladite première surface d'appariement (502) correspond à une surface d'appariement de fixation d'un dispositif de couplage (507) à partir d'un système de fourniture de fluide pour fournir un couplage entre ledit orifice d'entrée de fluide (503) de ladite première surface d'appariement (502) et le dispositif de couplage (507).

11. Dispositif de déplacement de matériau (10) selon la revendication 10, dans lequel ladite fixation comporte une fixation à crochets et à boucles (501) qui est positionnée uniquement sur ladite partie de surface supérieure.

12. Utilisation d'un dispositif de déplacement de matériau selon l'une quelconque des revendications précédentes en tant que matelas de liquide pour supporter un patient, de manière à comporter :
■ un élément de retenue de patient (300) défini le long d'une périphérie extérieure de ladite feuille supérieure (200) pour faciliter un maintien du patient centré sur le matelas de liquide.
